# EUROPÄISCHE PATENTSCHRIFT

(11) **EP 0 723 800 B1**
(45) Veröffentlichungstag und Bekanntmachung des Hinweises auf die Patenterteilung: **21.02.2001**
(21) Anmeldenummer: 95119016.4
(22) Anmeldetag: 13.12.1995
(51) Int. Cl.: B01D 46/52

(54) **Kassettenfilter**
Cassette filter
Cassette filtrante

(30) Priorität: 26.01.1995 DE 19502366
(43) Veröffentlichungstag der Anmeldung: 31.07.1996
(73) Patentinhaber: Firma Carl Freudenberg, 69469 Weinheim (DE)
(72) Erfinder: Hofmann, Margit, 69517 Gorxheimertal (DE); Unrath, Dieter, 69469 Weinheim (DE)

(56) Entgegenhaltungen:
- EP-A- 0 382 329
- WO-A-94/17897
- DE-A- 3 110 131
- DE-A- 3 439 255
- DE-C- 4 324 388
- GB-A- 2 048 110

## Beschreibung

Die Erfindung befaßt sich mit einem Kassettenfilter nach dem Oberbegriff von Anspruch 1.

Aus WO-A-9417897 ist ein Kassettenfilter der vorstehend genannten Art bekannt. Dieses Kassettenfilter hat einen deckel- und bodenlosen Kasten, welcher von ebenen Platten gebildet wird und der ein Filterpack einrahmt sowie mit diesem verklebt ist. Durch die Fertigung des Kastens aus Platten macht die Herstellung dieses Kassettenfilters einen großen Aufwand erforderlich, und es ergeben sich Schwierigkeiten bei einer großtechnischen Umsetzung der Herstellung eines solchen Kassettenfilters.

Aus US 3 386 231 ist ein Kassettenfilter bekannt, welches einen aus ebenen Platten gebildeten deckel- und bodenlosen Kasten hat, welcher einen formbeständigen Filterpack staubdicht umschließt. Hierbei ist sowohl der Filterpack als auch der Kasten jeweils für sich formbeständig ausgebildet.

Der Erfindung liegt die Aufgabe zugrunde, ein Kassettenfilter bereitzustellen, welches sich im großtechnischen Maßstab auf einfache Weise herstellen läßt und bei dem der Filterpack selbst ausgezeichnet formbeständig ist.

Bei dem erfindungsgemäßen Kassettenfilter bilden die Platten einen Teil eines endlosen Bandes und liegen somit in Bandform vor, wodurch sich eine großtechnische Herstellung wesentlich vereinfacht. Dieses Band wird dann mit dem Filterpack zur Bildung einer formbeständigen Einheit verklebt. Ferner umfaßt der Filterpack Falten, die mit Tiefprägungen versehen und durch die Tiefprägungen in dicht benachbarten Teilbereichen aufeinander abgestützt sind. Auf diese Weise besitzt der Filterpack selbst eine ausgezeichnete Eigen-formbeständigkeit, wodurch sich die Verklebung mit den bandförmigen Gebilden des Kastens vereinfacht. Da durch die Tiefprägungen dem Filterpack selbst eine ausreichende Eigen-Formbeständigkeit verliehen wird, erleichtert sich die Handhabung der mittels Kleben zusammenzufügenden Teile, so daß man auf effiziente Weise großtechnisch derartige Kassettenfilter nach der Erfindung ohne Schwierigkeiten herstellen kann.

Weitere vorteilhafte Ausgestaltungen der Erfindung sind in den Ansprüche 2 bis 14 wiedergegeben.

Die Ansprüche 2 und 3 befassen sich mit bevorzugten Klebstoffarten. Die Klebstoffschichten können einen Bestandteil eines doppelseitigen Klebebandes bilden. Hierdurch erzielt man eine besonders gleichmäßige Verteilung und Dicke, wodurch sich eine bestimmte Qualität der Klebeverbindung gewährleisten läßt. Die Anbringung kann besonders schnell und sauber erfolgen. Auch ist eine direkte Beschichtung des Bandes möglich. Bei den in den Ansprüchen 2 und 3 angegebenen bevorzugten Klebstoffarten lassen sich insbesondere Fließbewegungen im Anschluß an das Zusammenfügen der einzelnen Schichten lageunabhängig verhindern. Im Hinblick auf eine staubdichte Verbindung zwischen dem Filterpack und den Platten ist dies von Vorteil, wenn noch vor der endgültigen Aushärtung des Klebstoffs eine Lageveränderung und gegebenenfalls Drehung des Kassettenfilters um eine horizontale Achse vorgenommen werden muß, was beispielsweise bei der Lagerung und/oder Verpackung erforderlich ist.

Mit Hilfe der Auslegung nach Anspruch 4 vereinfacht sich die staubdichte Verbindung zwischen dem Außenumfang des Kastens und einer den Kasten aufnehmenden Rahmenkonstruktion. Die Gefahr des Auftretens von Staubdurchbruchstellen läßt sich deutlich reduzieren.

Aus Gewichtsersparnisgründen ist es von Vorteil, wenn der Stützbund zumindest einen Hohlraum umschließt. Dieser kann bedarfsweise einen Füllkörper enthalten, beispielsweise einen aus Hartschaum, um die Formbeständigkeit zu verbessern. Der Füllkörper kann bedarfsweise in den Hohlraum eingeklebt sein.

Bei der Auslegung des Kassettenfilters nach Anspruch 9 kann das Vorfilter durch eine einfaltbare Verlängerung der Platten gebildet sein und bereitet daher keine Schwierigkeiten während des Transports des Kassettenfilters.

Die Erfindung wird nachstehend an Hand einer bevorzugten Ausführungsform unter Bezugnahme auf die beigefügte Zeichnung näher erläutert. Darin zeigt:
Fig. 1 eine Längsschnittansicht eines Kassettenfilters,
Fig. 2 eine Vorderansicht des in Figur 1 gezeigten Kassettenfilters, (nicht nach Anspruch 1),
Fig. 2a eine perspektivische Ansicht des Kassettenfilters nach Figur 1, und
Fig. 3 bis 6 Ausführungsbeispiele von Enden der Platten.

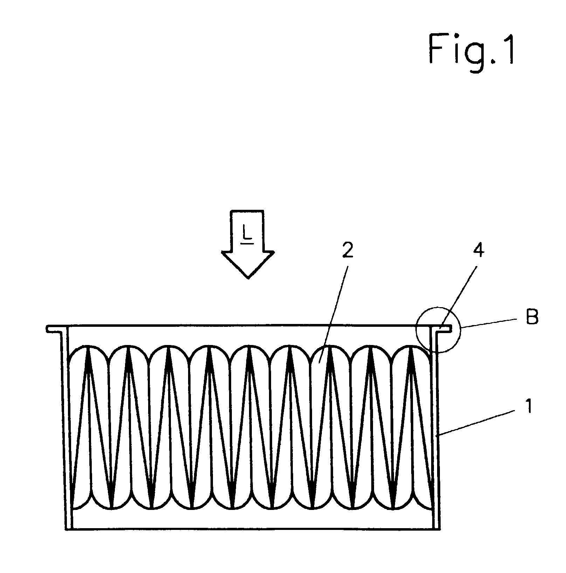

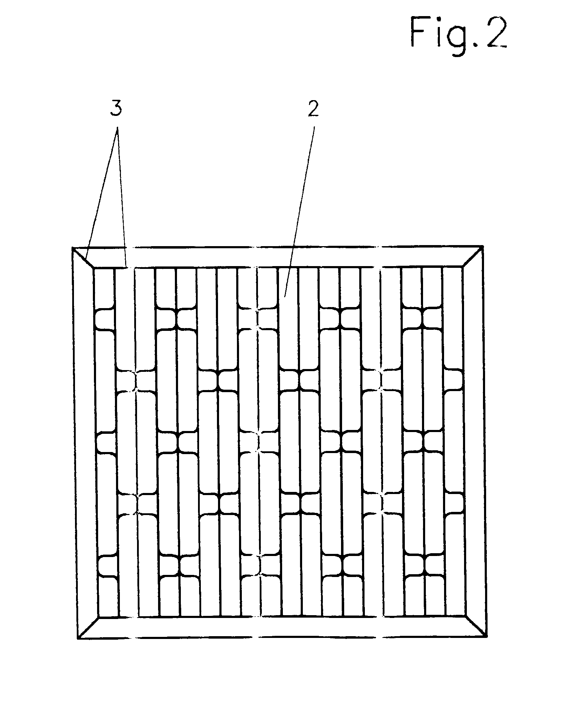

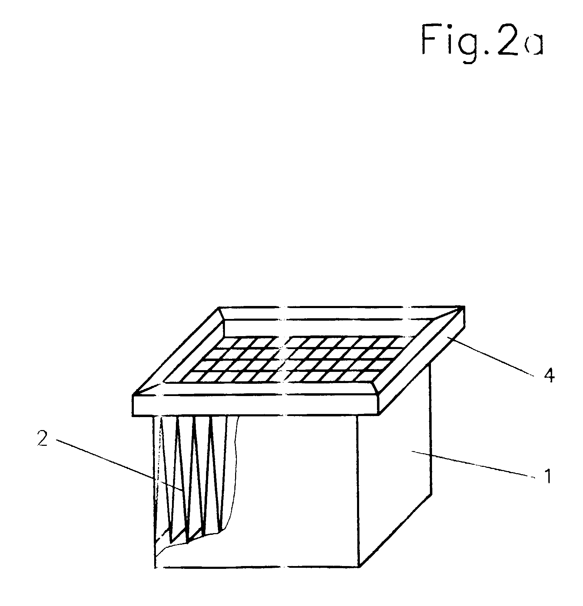

Das in den Fig. 1 und 2 gezeigte Kassettenfilter besteht aus einem durch ebene Platten 1 gebildeten, deckel- und bodenlosen Kasten, der einen formbeständigen Filterpack 2 staubdicht umschließt. Die Platten 1 sind durch Klebstoffschichten 3 untereinander und mit dem Filterpack 2 verklebt. Sie sind durch den Filterpack 2 in ihrer räumlichen Anordnung fixiert. Es ist dadurch entbehrlich, daß die Platten 1 eine große Wandstärke haben. Sie erfahren vielmehr durch den Filterpack 2 eine so gute räumliche Fixierung, daß sich auch unabhängig hiervon eine ausgezeichnete Stabilität hinsichtlich ihrer gegenseitigen Zuordnung zueinander und dem Filterpack 2 gewährleisten läßt. Die Platten 1 bestehen aus biegesteifen Kunststoffolien in Band form welche an dem der einströmenden Luft zugewandten Ende mit nach außen weisenden Stützbunden 4 versehen sind. Diese erstrecken sich senkrecht zur Richtung der einströmenden Luft. Sie sind so gestaltet, daß sich nach dem Einfügen in die in der Zeichnung nicht dargestellte Stützkonstruktion eine oberflächenbündige und staubdichte Anlage an dieser ergibt. Bedarfswiese können zwischen der Stützkonstruktion und den Stützbunden 4 auch in der Zeichnung nicht gezeigte Dichtelemente aus einem elastisch verformbaren Werkstoff vorgesehen sein.

Der Filterpack entspricht dem in der europäischen Patentanmeldung 0 382 329 beschriebenen Type. Er besteht gemäß dieser Ausführung aus einem zick-zackförmig gefalteten Streifen einer flexiblen Filtermatte, dessen aufeinanderfolgende Teilabschnitte mit spiegelbildlichen Tiefprägungen versehen und durch die Tiefprägungen in dicht benachbarten Teilbereichen aufeinander abgestützt sind. Der Filterpack besitzt dadurch eine ausgezeichnete Formbeständigkeit, was seine Verklebung mit den Platten vereinfacht. Er vermag außerdem in jeder Richtung verhältnismäßig großen Druckbelastungen standzuhalten ohne in nennenswerter Weise auszuweichen. Filterpacks dieser Art gelangen daher zur Anwendung. Sie können bedarfsweise auch aus Papier, Glasfaserpapier, Vliesstoff oder anderen einschlägig verwendeten Materialien bestehen.

Als Klebstoff gelangt ein Polyurethan zur Anwendung. Er hat thixotrope Eigenschaften.

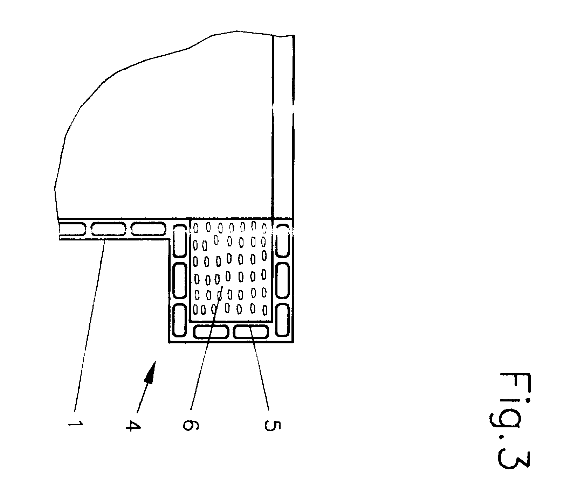

In den Fig. 3 bis 5 werden voneinander abweichend gestaltete Eckbereiche von Kassettenfiltern ähnlich Fig. 1 wiedergegeben, die sich auf die in Fig. 1 mit "B" bezeichneten Bereich beziehen.

Die in Fig. 3 gezeigte Ausführung nimmt bezug auf ein Kassettenfilter, bei dem die Platten 1 an dem der einströmenden Luft zugewandten Ende mehrfach abgewinkelt sind und einen nach innen geöffneten Hohlraum 5 umschließen, In den Hohlraum 5 ist ein Formkörper aus einem Hartkunststoff eingeklebt. Die Platten 1 als solche enthalten eine Vielzahl von sich parallel zueinander erstreckenden Hohlräumen 5. Sie bestehen aus Kunststoff und weisen durch das Vorhandensein der Hohlräume bei geringem Gewicht eine große Formbeständigkeit auf.

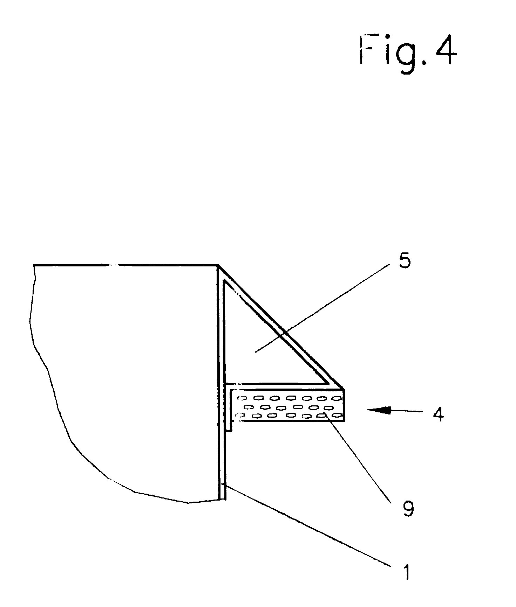

Fig. 4 verdeutlicht eine Ausbildungsvariante, bei der die Platten 1 an dem der einströmenden Luft zugewandten Ende zur Bildung eines Stützbundes 4 mehrfach abgewinkelt sind und gemeinsam einen Hohlraum 5 umschließen. Die dabei entstehende, dreieckige Form ist statisch stabil und außerordentlich formbeständig. An dem der während der bestimmungsgemäßen Verwendung der Stützkonstruktion zugewandten Ende ist der Stützbund 4 mit einer Weichschaumschicht 9 verklebt. Hierdurch wird eine gute Abdichtung nach dem Einfügen des Kassettenfilters in eine Stützkonstruktion erreicht, wenn eine geringe Mindestanpressung erreicht ist, beispielsweise durch eine Verwendung von Andrückfedern oder -klammern.

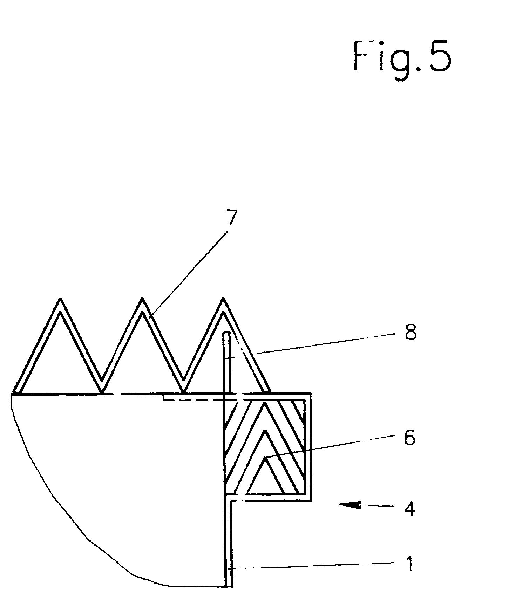

In Fig. 5 ist eine Ausführung wiedergegeben, bei der der Kasten ebenfalls aus einem Hartpapier besteht. Sein der einströmenden Luft zugewandtes Ende umschließt einen nach innen geöffneten Hohlraum, in den ein Füllkörper 6 aus Holz eingeklebt ist. Der Kasten erhält dadurch eine große Formbeständigkeit. Das der einströmenden Luft zugewandte Ende 8 der Platten ist einfaltbar gestaltet. Es ist in Fig. 5 in aufgefaltetem Zustand wiedergegeben und in ein Faltenfilter 7 eingefügt. Dieses dient während der bestimmungsgemäßen Verwendung als Vorfilter und hält groben Schmutz und Staub von dem eigentlichen Filterpack 2 fern. Die Gebrauchsdauer wird dadurch wesentlich verbessert. Das Kassettenfilter besteht völlig aus veraschbaren Werkstoffen ist nach Gebrauch durch eine Verbrennung verhältnismäßig einfach zu entsorgen.

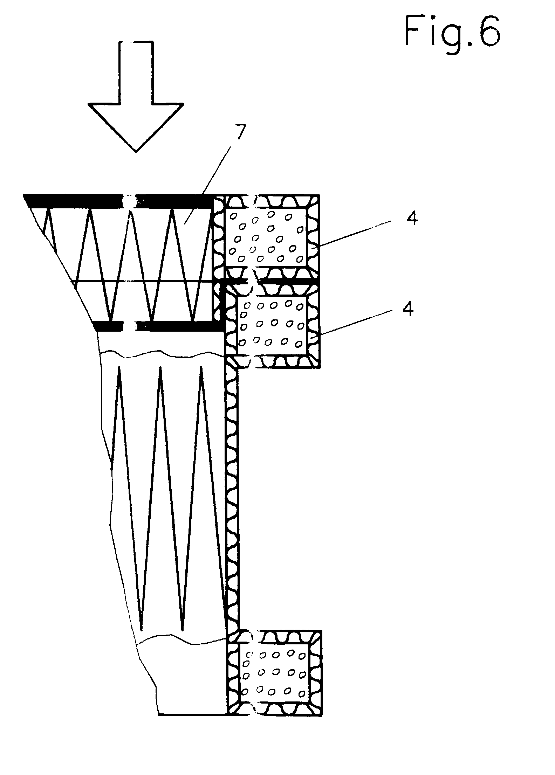

In Fig. 6 ist ein Ausschnitt aus einem Kassettenfilter wiedergegeben , bei dem an dem Kasten des Kassettenfilters ein Vorfilter 7 mittels einer Steckverbindung festgelegt ist. Sowohl das Kassettenfilter als auch das Vorfilter 7 ist mit einem Stützbund versehen. Beide Stützbunde liegen während der bestimmungsgemäßen Verwendung dichtend aufeinander auf. Alternativ kann ein elastisches Dichtband in einem eventuell vorhandenen Zwischenraum zwischen den Stützbunden vorgesehen sein, beispielsweise um Oberflächenunebenheiten auszugleichen.

## Patentansprüche

1. Kassettenfilter mit einem deckel- und bodenlosen Kasten aus ebenen Platten(1), welcher einen Filterpack (2) staubdicht einrahmt und mit diesem durch Klebstoffschichten (3) verklebt ist, wobei der Filterpack (2) aus einem zick-zackförmig gefalteten Streifen aus einer flexiblen Filtermatte besteht und räumlich fixiert ist, **dadurch gekennzeichnet**, daß die Platten (1) Bestandteile eines Bandes bilden, und daß der Filterpack (2) formbeständig ausgelegt ist und Falten aufweist, die mit Tiefprägungen versehen und durch die Tiefprägungen in dicht benachbarten Teilbereichen aufeinander abgestützt sind.

2. Kassettenfilter nach Anspruch 1, **dadurch gekennzeichnet**, daß die Platten (1) mit dem Filterpack durch Klebstoffschichten (3) verklebt sind, die in allen Teilbereichen aus einem übereinstimmend zusammengesetzten thixotropen Klebstoff bestehen.

3. Kassettenfilter nach Anspruch 2, **dadurch gekennzeichnet**, daß der Klebstoff ein Polyurethan-Klebstoff ist.

4. Kassettenfilter nach einem der Ansprüche 1 bis 3, **dadurch gekennzeichnet**, daß die Platten (1) zumindest an einem Ende des Kastens mit einem nach außen weisenden Stützbund (4) versehen sind.

5. Kassettenfilter nach einem der Anspruch 4, **dadurch gekennzeichnet**, daß der Stützbund (4) zumindest einen Hohlraum (5) umschließen.

6. Kassettenfilter nach Anspruch 5, **dadurch gekennzeichnet**, daß der Hohlraum (5) einen Füllkörper (6) enthält.

7. Kassettenfilter nach Anspruch 6, **dadurch gekennzeichnet**, daß der Füllkörper (6) aus einem Hartschaum besteht.

8. Kassettenfilter nach Anspruch 6 oder 7, **dadurch gekennzeichnet**, daß der Füllkörper (6) in den Hohlraum (5) eingeklebt ist.

9. Kassettenfilter nach einem der vorangehenden Ansprüche, **dadurch gekennzeichnet**, daß zumindest an dem der einströmenden Luft zugewandten Ende des Kastens eine Halteeinrichtung für ein Vorfilter (7) vorgesehen ist.

10. Kassettenfilter nach Anspruch 9, **dadurch gekennzeichnet**, daß die Halterung durch eine einfaltbare Verlängerung (8) der jeweiligen Platte (1) gebildet ist.

11. Kassettenfilter nach Anspruch 9, **dadurch gekennzeichnet**, daß der Kasten und das Vorfilter (7) durch eine Steckverbindung aneinander festlegbar sind.

12. Kassettenfilter nach einem der vorangehenden Ansprüche, **dadurch gekennzeichnet**, daß die Platten ineinanderübergehend ausgebildet sind.

13. Kassettenfilter nach einem der vorangehenden Ansprüche, **dadurch gekennzeichnet**, daß die Platten (1) aus biegesteifen Kunststoffolien bestehen.

## Claims

1. A cartridge filter with a lidless and bottomless box which is composed of plane plates (1) and which frames a filter pack (2) in a dust-tight manner and is adhesively bonded to the latter by means of adhesive layers (3), the filter pack (2) comprising a zigzag-folded strip of flexible filter matting and being spatially fixed, characterized in that the plates (1) form integral parts of a band, and in that the filter pack (2) is of dimensionally stable design and has folds which are provided with deep embossings and are supported on one another in closely adjacent part regions by means of the deep embossings.

2. A cartridge filter according to claim 1, characterized in that the plates (1) are adhesively bonded to the filter pack by means of adhesive layers (3) which consist in all part regions of an identically composed thixotropic adhesive.

3. A cartridge filter according to claim 2, characterized in that the adhesive is a polyurethane adhesive.

4. A cartridge filter according to any one of claims 1 to 3, characterized in that the plates (1) are provided, at least at one end of the box, with an outwardly facing supporting collar (4).

5. A cartridge filter according to claim 4, characterized in that the supporting collar (4) surrounds at least one cavity (5).

6. A cartridge filter according to claim 5, characterized in that the cavity (5) contains a filling body (6).

7. A cartridge filter according to claim 6, characterized in that the filling body (6) comprises a hard foam.

8. A cartridge filter according to claim 6 or 7, characterized in that the filling body (6) is glued into the cavity (5).

9. A cartridge filter according to any one of the preceding claims, characterized in that a holding device for a prefilter (7) is provided at least at that end of the box which faces the inflowing air.

10. A cartridge filter according to claim 9, characterized in that the holding device is formed by an inwardly foldable prolongation (8) of the respective plate (1).

11. A cartridge filter according to claim 9, characterized in that the box and the prefilter (7) are capable of being fixed to one another by means of a plug connection.

12. A cartridge filter according to any one of the preceding claims, characterized in that the plates are designed to merge one into the other.

13. A cartridge filter according to any one of the preceding claims, characterized in that the plates (1) comprise flexurally resistant plastic sheets.

## Revendications

1. Cassette filtrante, avec un caisson sans couvercle et sans fond, constituée de plaques planes (1), qui encadre de manière étanche aux poussières un empilement de filtre (2) et qui est collée à ce dernier au moyen de couches adhésives (3), l'empilement de filtre (2) étant constitué d'une bande de mat de filtre flexible plié en zigzag et fixé spatialement, caractérisée en ce que les plaques (1) font partie d'une bande et en ce que l'empilement de filtre (2) est conçu de manière à avoir une forme stable et présente des plis qui sont dotés d'emboutissages profonds et qui, dans des parties étroitement voisines, s'appuient les uns sur les autres par les emboutissages profonds.

2. Cassette filtrante selon la revendication 1, caractérisée en ce que les plaques (1) sont collées à l'empilement de filtre par des couches adhésives (3) qui, dans toutes les parties, sont constituées d'une colle thixotrope de composition appropriée.

3. Cassette filtrante selon la revendication 2, caractérisée en ce que la colle est une colle au polyuréthane.

4. Cassette filtrante selon l'une des revendications 1 à 3, caractérisée en ce que les plaques (1) sont dotées, au moins à une extrémité du caisson, d'un collet de soutien (4) orienté vers l'extérieur.

5. Cassette filtrante selon la revendication 4, caractérisé en ce que le collet de soutien (4) entoure au moins un espace vide (5).

6. Cassette filtrante selon la revendication 5, caractérisée en ce que l'espace vide (5) contient un corps de remplissage (6).

7. Cassette filtrante selon la revendication 6, caractérisé en ce que le corps de remplissage (6) est constitué d'une mousse dure.

8. Cassette filtrante selon la revendication 6 ou 7, caractérisée en ce que le corps de remplissage (6) est collé dans l'espace vide (5).

9. Cassette filtrante selon l'une des revendications précédentes, caractérisée en ce qu'au moins sur l'extrémité du caisson tournée vers l'air entrant, il est prévu un dispositif de maintien pour un préfiltre (7).

10. Cassette filtrante selon la revendication 9, caractérisée en ce que le maintien est formé par un prolongement repliable (8) de chaque plaque (1).

11. Cassette filtrante selon la revendication 9, caractérisée en ce que le caisson et le préfiltre (7) peuvent être fixés l'une contre l'autre par une liaison enfichable.

12. Cassette filtrante selon l'une des revendications précédentes, caractérisée en ce que les plaques sont configurées de manière à se prolonger l'une dans l'autre.

13. Cassette filtrante selon l'une des revendications précédentes, caractérisée en ce que les plaques (1) sont constituées de feuilles de matière synthétique résistant à la flexion.
